# EUROPÄISCHE PATENTSCHRIFT

(11) **EP 1 614 943 B1**
(45) Veröffentlichungstag und Bekanntmachung des Hinweises auf die Patenterteilung: **26.09.2007**
(21) Anmeldenummer: 04405436.9
(22) Anmeldetag: 09.07.2004
(51) Int. Cl.: F16K 5/06

(54) **Kugelhahn**
Ball valve
Robinet à boisseau sphérique

(43) Veröffentlichungstag der Anmeldung: 11.01.2006
(73) Patentinhaber: GEBERIT TECHNIK AG, 8645 Jona (CH)
(72) Erfinder: Winter, Felix, 8713 Uerikon (CH)
(74) Vertreter: Groner, Manfred

(56) Entgegenhaltungen:
- EP-A- 0 112 977
- EP-A- 0 458 980
- EP-A- 1 039 188
- EP-A- 1 130 296
- WO-A-00/65262

## Beschreibung

Die Erfindung betrifft einen Kugelhahn nach dem Oberbegriff des Anspruchs 1.

Der Kugelhahn findet seit langem Verwendung als Absperrorgan für flüssige und gasförmige Medien. Die Abdichtung der Kugel gegenüber dem Gehäuse erfolgt durch zwei ringförmige Dichtungselemente. Der Antrieb erfolgt beispielsweise von Hand mit einem aufgestecktem Bedienungsgriff oder elektrisch, pneumatisch oder hydraulisch.

Durch die Abdichtung mit ringförmigen Dichtungselementen werden zwei Restmediumkammem bzw. Totkammern gebildet. Diese sind bei vielen Anwendungen nicht akzeptabel oder zumindest unerwünscht. Das Medium in solchen Toträumen kann zu Funktionsstörungen oder zu einer bakteriellen Verkeimung führen. Im Stand der Technik sind bereits Kugelhähne bekannt geworden, bei denen der Totraum spülbar ist.

Ein Kugelhahn der genannten Gattung ist im Stand der Technik durch die EP-A-1130296 bekannt geworden. Bei diesem steht der Totraum zwischen der Kugel und dem Gehäuse über Bohrungen mit der Durchgangsöffnung der Kugel in Verbindung. Diese Bohrungen sind vor und nach einer Verengung der Durchgangsöffnung angeordnet. Die Verengung soll die Wirkung haben, dass bei durchflossenem Kugelhahn aufgrund der herrschenden Druckunterschieds vor und nach der Verengung der Totraum durchspült wird. Eine solche Verengung behindert den Durchfluss und ist in der Regel nicht erwünscht.

Ein Kugelhahn mit spülbarem Totraum ist beispielsweise aus der DE 41 27 114 bekannt geworden. Bei diesem sind in das Gehäuse Belüftungsventile eingebaut, über welche Spülwasser, Lauge oder Dampf zur hygienischen Behandlung des Totraumes zuführbar sind. Die Mittel als auch das Verfahren zum Spülen der Toträume ist hier ausserordentlich aufwändig und für Spezialfälle gedacht.

Die WO 00/65262 offenbart einen Kugelhahn, bei dem die Kugel am unteren Ende eine Bohrung aufweist, welche den Durchgang der Kugel mit dem Totraum verbindet. Zweck dieser Bohrung ist die einfachere und kostengünstigere Herstellung der Kugel.

Der Erfindung liegt die Aufgabe zugrunde, einen Kugelhahn der genannten Art zu schaffen, der eine einfache und dennoch strömungstechnisch optimale Hinterspülung der Restmediumkammern ermöglicht.

Die Aufgabe ist bei einem gattungsgemässen Kugelhahn gemäss Anspruch 1 gelöst. Beim erfindungsgemässen Kugelhahn werden die Restmediumkammern jeweils beim geöffneten Hahn selbsttätig ausgespült. Da eine Zirkulation stattfindet, ist diese Ausspülung sehr effektiv, da sie jeden Bereich der Restmediumkammern erfasst. Die Zirkulation dauert an, solange der Kugelhahn geöffnet ist.

Eine besonders wirksame Zirkulationsströmung wird erreicht, wenn gemäss einer Weiterbildung der Erfindung die Kugel wenigstens zwei Bohrungen aufweist, welche den Durchgang der Kugel mit den Restmediumkammern verbindet. Solche Bohrungen können mit vergleichsweise kleinem Aufwand in die Kugel eingearbeitet werden. Es sind deshalb dadurch nur geringe Mehrkosten erforderlich.

Nach einer Weiterbildung der Erfindung ist vorgesehen, dass die genannten beiden Bohrungen bezüglich der Strömungsrichtung des Mediums schräg verlaufen. Die eine der beiden Bohrungen führt zu einer vorderen Ringkammer der Restmediumkammern und die andere Bohrung zu einer hinteren Ringkammer der Restmediumkammern. Durch den schrägen Verlauf der beiden Bohrungen entsteht eine Druckdifferenz, welche eine wirksame Zirkulation des Mediums bewirkt.

Eine besonders wirksame Zirkulation wird dann erreicht, wenn gemäss einer Weiterbildung der Erfindung bei geöffnetem Hahn eine Bohrung einen Unterdruck und die andere Bohrung einen Überdruck erzeugt.

Gemäss der Erfindung ist ein Verbindungskanal vorgesehen, der einen vorderen Ringraum mit einem hinteren Ringraum verbindet, wobei diese beiden Ringräume Restmediumkammem bilden. Dadurch wird erreicht, dass im gesamten Totraum bei geöffnetem Hahn eine wirksame Zirkulation des Mediums stattfindet.

Der genannte Verbindungskanal ist in der Kugel angeordnet. Vorzugsweise verläuft dieser Verbindungskanal im Wesentlichen parallel zum Durchgang der Kugel. Dieser Verbindungskanal bildet gemäss einer Weiterbildung der Erfindung Mittel zum Verbinden des Hahnkükens mit einer Spindel des Antriebs.

Weitere vorteilhafte Merkmale ergeben sich aus den abhängigen Patentansprüchen, der nachfolgenden Beschreibung sowie der Zeichnung.

Ein Ausführungsbeispiel der Erfindung wird anhand der Zeichnung näher erläutert. Es zeigen:
- Figur 1: ein Schnitt durch einen erfindungsgemässen Kugelhahn,
- Figur 2: ein Schnitt entlang der Linie II-II der Figur 1 und
- Fig. 3a und 3b: schematische Darstellungen zur Erläuterung der Wirkungsweise der Erfindung.

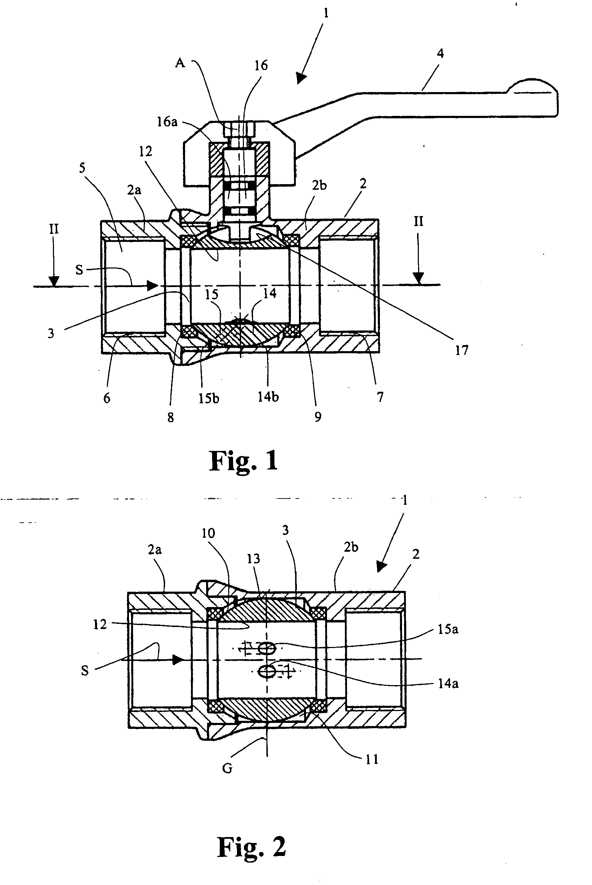

Die Figuren 1 und 2 zeigen einen Kugelhahn 1, der für den Anschluss von hier nicht gezeigten Leitungen ein Gehäuse 2 aufweist. Dieses besteht aus zwei miteinander verbundenen, beispielsweise miteinander verschraubten, Gehäuseteilen 2a und 2b. Es besteht auch die Möglichkeit, das Gehäuse auch dreiteilig auszubilden, und zwar mit einem Mittelteil und zwei weiteren Gehäuseteilen. Für den Anschluss der genannten Leitungen weisen die beiden Gehäuseteile 2a und 2b jeweils ein Gewinde 6 bzw. 7 auf. Bei geöffnetem Kugelhahn 1 bildet ein Durchgang 12 eine Kugel 3 einen Kanal 5, der in den Figuren 1 und 2 beispielsweise von links nach rechts in Richtung des Pfeils S durchströmt wird.

Die Kugel 3 ist gegenüber dem Gehäuse 2 mit zwei Dichtungselementen 8 und 9 abgedichtet. Diese Dichtungselemente 8 und 9 sind beispielsweise Dichtungsringe aus gummielastischem Material, Keramik und dergleichen. Die Kugel 3 ist in den Figuren 1 und 2 in der geöffneten Position gezeichnet. Durch den im Querschnitt kreisrunden Durchgang 12 wird das Medium in der Richtung S des Kanals 5 geführt. Das Medium ist insbesondere Wasser, kann aber auch eine andere Flüssigkeit oder auch ein Gas sein.

Um den Kugelhahn 1 zu schliessen, wird die Kugel 3 um 90° um eine Achse A gedreht. Für den Antrieb von Hand ist ein aufgesteckter Bediengriff 4 vorgesehen, der als einarmiger Hebel ausgebildet ist. Der Bedienhebel 4 ist über eine abgedichtete Spindel 16 bzw. Schaltwelle mit der Kugel 3 verbunden. Der Antrieb kann aber auch über einen anderen geeigneten Griff oder motorisch erfolgen.

Die Kugel 3 weist in einem oberen Bereich einen Verbindungskanal 17 auf, der sich bei geöffnetem Hahn gemäss Figur 1 im Wesentlichen parallel zur Strömungsrichtung S erstreckt. In diesen Verbindungskanal 17 greift von oben ein Mitnahmenocken 16a der Spindel 16 ein. Wird der Bediengriff 4 um die Achse A gedreht, so dreht entsprechend die Kugel 3 mit.

Der Verbindungskanal 17 ist mit einer vorderen Restmediumkammer 10 als auch mit einer hinteren Restmediumkammer 11 verbunden. Der Verbindungskanal 17 ist als oben offener Schlitz ausgebildet, der sich zwischen diesen beiden Kammern 10 und 11 erstreckt. Die Kammern 10 und 11 sind jeweils ringförmig und durch das Gehäuse 2, die Kugel 3 und durch das Dichtungselement 8 bzw. 9 gebildet. Der Nocken 16a, welcher in den Verbindungskanal 17 eingreift, ist so ausgebildet, dass er den Querschnitt des Verbindungskanals 17 wenigstens bereichsweise offen hält.

In die Kugel 3 sind zwei Bohrungen 14 und 15 eingearbeitet, die gemäss Figur 1 schräg zur Strömungsrichtung S verlaufen. Der Winkel zur Strömungsrichtung S beträgt beispielsweise und insbesondere etwa 45°. Die Bohrungen 14 und 15 bilden Spülbohrungen. Sie besitzen gemäss Figur 2 jeweils eine Öffnung 14a bzw. 15a, welche in den Durchgang 12 mündet. Gleichzeitig besitzen diese Bohrungen 14 und 15 Öffnungen 14b bzw. 15b, welche in die hintere Restmediumkammer 11 bzw. die vordere Restmediumkammer 10 mündet. Die Bohrung 14 verbindet somit den Durchgang 12 mit der hinteren Restmediumkammer 11. Die Bohrung 15 verbindet den Durchgang 12 mit der vorderen Restmediumkammer 10. Die Öffnungen 14a und 15a liegen gemäss Figur 2 auf einer Geraden G, welche quer zur Strömungsrichtung S verläuft.

Nachfolgend wird die Wirkungsweise des Kugelhahns 1 näher erläutert.

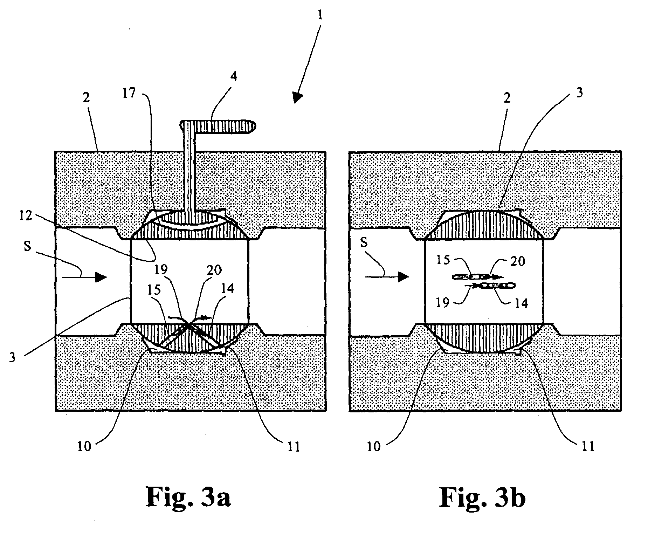

Strömt das Medium gemäss den Figuren 3a und 3b bei geöffnetem Kugelhahn 1 von links nach rechts durch den Durchgang 12 der Kugel 3, so fliesst das Medium an den beiden Öffnungen 14a und 15a vorbei. In der Bohrung 14 entsteht dadurch ein Überdruck und in der Bohrung 15 ein Unterdruck. Ein Teil des Mediums gelangt dadurch in Richtung des Pfeils 19 durch die Bohrung 14 in die hintere Restmediumkammer 1-1. Gleichzeitig gelangt Medium aus der Restmediumkammer 10 durch die Bohrung 15 in den Durchgang 12. Das in die hintere Restmediumkammer 11 einströmende Medium führt zu einer Zirkulation des Mediums in der hinteren Restmediumkammer 11. Durch diese Zirkulation gelangt das Medium zum Verbindungskanal 17 und durch diesen in die vordere Restmediumkammer 10. Aus der vorderen Restmediumkammer 10 wird durch den Unterdruck in der Bohrung 15 Medium gemäss Pfeil 20 in den Durchgang 12 gefördert. Bei geöffnetem Kugelhahn 1 findet somit eine dauernde Zirkulation des Mediums in den beiden Kammern 10 und 11 sowie im Verbindungskanal 17 statt. Dadurch werden die genannten Kammern 10 und 11 intensiv vom Medium durchspült. Ist der Kugelhahn 1 geschlossen, so findet keine Zirkulation statt, der Durchgang 12 ist aber weiterhin mit den beiden Kammern 10 und 11 verbunden. Sobald der Kugelhahn 1 geöffnet wird, beginnt die genannte Zirkulation in den beiden Kammern 10 und 11 und diese bleibt aufrecht erhalten, solange der Kugelhahn 1 geöffnet ist. Die Zirkulation erfolgt auch dann, wenn der Kugelhahn 1 nicht vollständig, sondern lediglich teilweise geöffnet ist. Die Kugel ist so ausgestattet, dass die Wirkung auch zutrifft, wenn die Durchflussrichtung umgekehrt ist.

### Bezugszeichenliste

- 1: Kugelhahn
- 2: Gehäuse
- 2a: Gehäuseteil
- 2b: Gehäuseteil
- 3: Kugel
- 4: Bedienungsgriff
- 5: Kanal
- 6: Gewinde
- 7: Gewinde
- 8: Dichtungselement
- 9: Dichtungselement
- 10: Restmediumkammer
- 11: Restmediumkammer
- 12: Durchgang
- 13: Aussenfläche (Hahnküken)
- 14: Bohrung
- 14a: Öffnung
- 14b: Öffnung
- 15: Bohrung
- 15a: Öffnung
- 15b: Öffnung
- 16: Spindel
- 16a: Nocken
- 17: Verbindungskanal
- 19: Pfeil
- 20: Pfeil
- A: Achse
- G: Gerade
- S: Hauptströmung (Pfeil)

## Patentansprüche

1. Kugelhahn, mit einem Gehäuse (2) zum Anschluss an Leitungen, mit einer Kugel (3), die zwischen ringförmigen Dichtungselementen (8, 9) drehbar gelagert ist und mit zwischen dem Gehäuse (2), der Kugel (3) und Dichtungselementen (8, 9) gebildeten Restmediumkammern (10, 11), wobei Mittel (14, 15) vorgesehen sind, welche in den Restmediumkammern (10, 11) bei geöffnetem Hahn eine Zirkulationsströmung bewirken, durch welche die Restmediumkammern (10, 11) ausgespült werden, **dadurch gekennzeichnet, dass** ein Verbindungskanal (17) vorgesehen ist, der eine vordere Restmediumkammer (10) mit einer hinteren Restmediumkammer (11) verbindet und dass der Verbindungskanal (17) ein Schlitz in der Kugel (3) ist.

2. Kugelhahn nach Anspruch 1, **dadurch gekennzeichnet, dass** die Kugel (3) wenigstens zwei Bohrungen (14, 15) aufweist, welche den Durchgang (12) der Kugel (3) mit den Restmediumkammern (10, 11) verbindet.

3. Kugelhahn nach Anspruch 2, **dadurch gekennzeichnet, dass** die beiden Bohrungen (14, 15) bezüglich der Strömungsrichtung (S) des Mediums schrägt verlaufen.

4. Kugelhahn nach Anspruch 2 oder 3, **dadurch gekennzeichnet, dass** bei geöffnetem Hahn eine Bohrung (15) einen Unterdruck und die andere Bohrung (14) einen Überdruck erzeugt.

5. Kugelhahn nach einem der Ansprüche 2 bis 4, **dadurch gekennzeichnet, dass** eine Bohrung (15) mit einer vorderen Restmediumkammer (10) und die andere Bohrung (14) mit einer hinteren Restmediumkammer (11) verbunden ist.

6. Kugelhahn nach Anspruch 1, **dadurch gekennzeichnet, dass** der Verbindungskanal (17) im Wesentlichen parallel zur Strömungsrichtung (S) des Durchgangs (12) verläuft.

7. Kugelhahn nach einem der Ansprüche 1 bis 6, **dadurch gekennzeichnet, dass** die Zirkulationsströmung auch bei umgekehrter Strömungsrichtung gewährleistet ist.

## Claims

1. Ball valve, with a housing (2) for connection to lines, having a ball (3) that is supported between ring-shaped sealing elements (8, 9) in such a way as to be capable of rotating, and having residual medium chambers (10, 11) formed between the housing (2), the ball (3) and the sealing elements (8, 9), there being provided means (14, 15) which, with the valve open, bring about a circulation flow inside the residual medium chambers (10, 11), by means of which flow the residual medium chambers (10, 11) are flushed out, **characterized in that** a connecting channel (17) is provided, which connects a front residual medium chamber (10) to a rear residual medium chamber (11), and **in that** the connecting channel (17) is a slot in the ball (3).

2. Ball valve according to Claim 1, **characterized in that** the ball (3) exhibits at least two bores (14, 15), which connect the passageway (12) in the ball (3) with the residual medium chambers (10, 11).

3. Ball valve according to Claim 2, **characterized in that** the two bores (14, 15) are oriented at an angle in relation to the direction of flow (S) of the medium.

4. Ball valve according to Claim 2 or 3, **characterized in that**, with the valve open, one bore (15) generates a negative pressure and the other bore (14) generates a positive pressure.

5. Ball valve according to one of Claims 2 to 4, **characterized in that** one bore (15) is connected to a front residual medium chamber (10) and the other bore (14) is connected to a rear residual medium chamber (11).

6. Ball valve according to Claim 1, **characterized in that** the connecting channel (17) is oriented essentially parallel to the direction of flow (S) of the passageway (12).

7. Ball valve according to one of Claims 1 to 6, **characterized in that** the circulation flow is also assured in the event of a reversed direction of flow.

## Revendications

1. Robinet à boisseau sphérique, avec un corps (2) à raccorder à des conduites, avec une bille (3) qui peut tourner entre deux éléments d'étanchéité annulaires (8, 9) et avec des chambres de fluide résiduel (10, 11) entre le corps (2), la bille (3) et les éléments d'étanchéité (8, 9), dans lequel il est prévu des moyens (14, 15) qui provoquent un courant de circulation dans les chambres de fluide résiduel (10, 11) lorsque le robinet est ouvert, assurant ainsi une purge des chambres de fluide résiduel (10, 11), **caractérisé en ce qu'**il est prévu un canal de raccordement (17) qui relie une chambre de fluide résiduel antérieure (10) avec une chambre de fluide résiduel postérieure (11) et **en ce que** le canal de raccordement (17) est une fente dans la bille (3).

2. Robinet à boisseau sphérique selon la revendication 1, **caractérisé en ce que** la bille (3) comporte au moins deux alésages (14, 15), qui relient le passage (12) à travers la bille (3) aux chambres de fluide résiduel (10, 11).

3. Robinet à boisseau sphérique selon la revendication 2, **caractérisé en ce que** les deux alésages (14, 15) sont obliques par rapport à la direction d'écoulement (S) du fluide.

4. Robinet à boisseau sphérique selon la revendication 2 ou 3, **caractérisé en ce qu'**un alésage (15) provoque une dépression et l'autre alésage (14) provoque une surpression lorsque le robinet est ouvert.

5. Robinet à boisseau sphérique selon l'une quelconque des revendications 2 à 4, **caractérisé en ce qu'**un alésage (15) est relié à une chambre de fluide résiduel antérieure (10) et l'autre alésage (14) est relié à une chambre de fluide résiduel postérieure (11).

6. Robinet à boisseau sphérique selon la revendication 1, **caractérisé en ce que** le canal de raccordement (17) est sensiblement parallèle à la direction d'écoulement (S) du passage (12).

7. Robinet à boisseau sphérique selon l'une quelconque des revendications 1 à 6, **caractérisé en ce que** le courant de circulation est garanti aussi dans la direction d'écoulement inverse.
